(19) Europäisches Patentamt
European Patent Office
Office européen des brevets

(11) Veröffentlichungsnummer: **0 007 623**
**B1**

(12) # EUROPÄISCHE PATENTSCHRIFT

(45) Veröffentlichungstag der Patentschrift: **24.02.82**

(51) Int. Cl.³: **C 07 C 143/78,**
C 08 K 5/43, C 08 L 77/00

(21) Anmeldenummer: **79102634.7**

(22) Anmeldetag: **25.07.79**

(54) **Verfahren zur Herstellung thermostabiler Arylsulfonylalkylamide und deren Verwendung als Weichmacher für Polyamide.**

(30) Priorität: **01.08.78 DE 2833650**

(43) Veröffentlichungstag der Anmeldung:
**06.02.80 Patentblatt 80/3**

(45) Bekanntmachung des Hinweises auf die Patenterteilung:
**24.02.82 Patentblatt 82/8**

(84) Benannte Vertragsstaaten:
**BE CH DE FR GB**

(56) Entgegenhaltungen:
**FR - A - 894 850**

(73) Patentinhaber: **BASF Aktiengesellschaft**
**Carl-Bosch-Strasse 38**
**D-6700 Ludwigshafen (DE)**

(72) Erfinder: **Armbrust, Herbert**
**Johann-Sebastian-Bach-Strasse 6**
**D-6718 Gruenstadt (DE)**
Erfinder: **Selberdinger, Richard, Ing.grad.**
**Speyerer Strasse 14**
**D-6701 Hochdorf-Assenheim (DE)**

**EP 0 007 623 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

# Verfahren zur Herstellung thermostabiler Arylsulfonylalkylamide und deren Verwendung als Weichmacher für Polyamide

Diese Erfindung betrifft die Herstellung thermostabiler Arylsulfonylalkylamide und ihre Verwendung als Weichmacher für Polyamide.

Die Verwendung von Arylsulfonylalkylamiden als Weichmacher ist an sich bekannt (Kunststoffhanbuch, Band VI, 1966, Seite 338). Bei der Herstellung von weichgemachten Polyamiden haben die Arylsulfonylalkylamide den Nachteil, daß ihre Hitzestabilität zu wünschen übrig läßt, so daß beim weichgemachten Polyamid unerwünschte Verfärbungen auftreten können.

Es wurde nun gefunden, daß man thermostabile Arylsulfonylalkylamide erhält, wenn man die Arylsulfonylalkylamide bei Temperaturen zwischen 150 und 250°C mit alkalisch wirkenden mitteln behandelt und aus dem Behandlungsgemisch die Arylsulfonylalkylamide durch Destillation abtrennt.

Die für das erfindungsgemäße Verfahren geeignete Arylsulfonylalkylamide sind z.B. Verbindungen der Formel

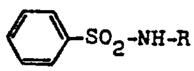

in der R ein geradkettiger oder verzweigter Alkylrest mit 4 bis 11 C—Atomen, wie ein Butyl- oder 2-Äthylhexyl-Rest bedeutet, und in der der Phenylrest noch durch einen Methylrest substituiert sein kann.

Die Arylsulfonylalkylamide werden nach dem neuen Verfahren z.B. 0.5 bis 15, vorzugsweise 3 bis 6 Stunden bei Temperaturen zwischen 150 und 250°C, vorzugsweise 190 bis 210°C, mit alkalisch wirkenden Mitteln behandelt. Als alkalisch wirkende Mittel kommen z.B. die Hydroxide, Carbonate, Bicarbonate und Alkoholate der Alkali- oder Erdalkalimetalle in Betracht. Zweckmäßigerweise verwendet man Natrium- oder Kaliumhydroxid. Das Gewichtsverhältnis Amid zu alkalisch wirkendem Mittel beträgt vorteilhaft 100 zu 0,001 bis 5.

Die nach dem erfindungsgemäßen Verfahren behandelten Arylsulfonylalkylamide zeichnen sich durch hohe Thermostabilität aus. Sie sind hervorragende Weichmacher für Polyamide wie Homo-Polyamide, z.B. Nylon 11 und 12 oder Co-Polyamide, wie Mischpolymerisate eines Polyamid 6.6/6 oder Polykondensationsprodukte aus Hexamethylendiamin, Diaminodicyclohexylmethan und Adipinsäure. Durch Zusetzen von bis zu 40% der erfindungsgemäß behandelten Arylsulfonsäurealkylamide zu den Polyamiden oder Copolyamiden lassen sich Massen herstellen, die nicht nur eine erhöhte Weichheit, Elastizität und eine verbesserte Kältebeständigkeit, sondern auch eine hohe Thermostabilität aufweisen. Man erhält — je nach der gewünschten Anwendung — weiche, geschmeidige Folien, Profile, Platten oder Bänder, die durch Recken noch vergütet werden können.

Der Erweichungspunkt der Mischpolyamide wird durch den Weichmacherzusatz verbreitert, so daß die Verarbeitungstemperatur erniedrigt werden kann.

Die Einarbeitung des Weichmachers erfolgt bei den Homopolyamiden üblicherweise mit einem Mischextruder in der Schmelze, bei den Co-Polyamiden kann die Einarbeitung über die Lösung, in Knetern, über Walzen oder über einen Extruder erfolgen.

*Beispiel 1*

Ein Gemisch aus 200 Teilen Benzolsulfonyl-N-n-butylamid, roh, und 0,2 Teilen Natriumhydroxid als 10%ige wäßrige Lösung hält man 4 Studen unter Stickstoff auf einer Temperatur von 200°C. Anschließend wird destilliert. Man erhält bei Kp 8 mbar und 180 bis 185°C 190 Teile Benzolsulfonyl-N-n-butylamid mit einer Hazenzahl von 40 bis 50. Zur Prüfung der Thermostabilität wird eine Probe 1 Stunde unter Stickstoff bei 200°C gehalten. Die Hazenzahl beträgt danach 60.

*Vergleichsbeispiel*

200 Teile Benzolsulfonyl-N-n-butylamid, roh, werdén destilliert. Man erhält bei Kp 0,13 mbar und 155 bis 160°C 192 Teile Benzolsulfonyl-N-n-butylamid mit einer Hazenzahl von etwa 100.

Bei einer Prüfung der Thermostabilität wie oben angegeben läßt sich die Hazenzahl nicht messen, da das Produkt zu tief gefärbt ist. Die Jod-Zahl beträgt 7 bis 10.

*Beispiel 2*

500 Teile Benzolsulfonyl-N-n-butylamid werden nach Zusatz von 0,5 Teilen Kaliumcarbonat 4 Stunden unter Stickstoff auf 200°C erhitzt. Anschließend wird destilliert. Man erhält bei Kp 8 mbar und 180 bis 185°C 482,5 Teile Benzolsulfonyl-N-n-butylamid mit einer Hazenzahl von 40. Die Prüfung auf Thermostabilität wie in Beispiel 1 ergibt eine Hazenzahl von 90.

*Beispiel 3*

Man verfährt wie im Beispiel 2 beschrieben, wobei man jedoch statt 0,5 Teilen Kaliumcarbonat 0,5 Teile Natriumacetat verwendet. Das Benzolsulfonyl-N-n-butylamid hat nach Destillation eine Hazenzahl von 100. Die Prüfung auf Thermostabilität gemäß Beispiel 1 ergibit eine Hazenzahl von 125.

*Beispiel 4*

Man verfährt wie im Beispiel 2 beschrieben, wobei man jedoch anstelle von 0,5 Teilen Kaliumcarbonat 1,7 Teile 30%ige Natriummethylat-Lösung verwendet. Das Benzolsulfonyl-N-n-butylamid hat nach Destillation eine Hazenzahl von 70. Die Prüfung auf Thermostabilität gemäß Beispiel 1 ergibt eine Hazenzahl von 110.

**Patentansprüche**

1. Verfahren zur Herstellung thermostabiler Arylsulfonylalkylamide, dadurch gekennzeichnet, daß man die Arylsulfonylalkylamide bei Temperaturen zwischen 150 und 250°C mit alkalisch wirkenden Mitteln behandelt und aus dem Behandlungsgemisch die Arylsulfonylalkyamide durch Destillation abtrennt.

2. Verfahren nach Anspruch 1, dadurch gekennzeichnet, daß man als Arylsulfonylalkylamide Verbindungen der Formel

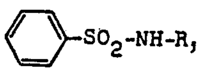

in der R ein geradkettiger oder verzweigter Alkylrest mit 4 bis 11 C—Atomen bedeutet und in der der Phenylrest noch durch einen Methylrest substituiert sein kann, verwendet.

3. Verwendung der nach dem Verfahren gamäß Anspruch 1 hergestellten Arylsulfonylakylamide als Weichmacher für Polyamide.

**Claims**

1. A process for the production of thermostable arylsulfonylalkyl amides, characterised in that the arylsulfonylalkyl amides are treated with basic agents at a temperature of from 150° to 250°C, and the arylsulfonylalkyl amides are separated from the treatment mixture by distillation.

2. A process as claimed in claim 1, characterised in that compounds of the formula

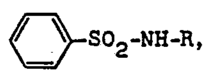

where R is linear or branched alkyl of 4 to 11 carbon atoms, and where the phenyl may also be substituted by methyl, are used as arylsulfonylalkyl amides.

3. Use of the arylsulfonylalkyl amides produced by the process as claimed in claim 1 as plasticizers for polyamides.

**Revendications**

1. Procédé pour la préparation d'arylsulfonylalcoylamides thermostables, caractérisé en ce qu'on traite les arylsulfonylalcoylamides par des agents à action alcaline à une température comprise entre 150 et 250°C et on sépare les arylsulfonylalcoylamides du mélange de traitement par distillation.

2. Procédé selon la revendication 1, caractérisé en ce qu'on utilise, en tant qu'arylsulfonylalcoylamides, des composés de formule

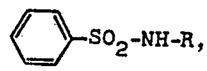

dans laquelle R représente un radical alcoyle à 4—11 atomes de C à chaîne rectiligne ou ramifiée et dans laquelle le radical phényle peut être encore substitué par un radical méthyle.

3. Utilisation des arylsulfonylalcoylamides obtenus par le procédé suivant la revendication 1, comme plastifiant pour des polyamides.